# EUROPÄISCHE PATENTSCHRIFT

(11) **EP 0 646 517 B1**
(45) Veröffentlichungstag und Bekanntmachung des Hinweises auf die Patenterteilung: **04.06.1997**
(21) Anmeldenummer: 94114277.0
(22) Anmeldetag: 10.09.1994
(51) Int. Cl.: B62D 33/06, B62D 65/00, B60J 5/04

(54) **Fahrerhaus-Baureihen mit höhenvariabler Fahrerhaustür**
Modular construction for driver's cabs of trucks with a variable height cab door
Système de construction par gammes pour cabines de conducteur de camions avec une porte de cabine à hauteur variable

(30) Priorität: 04.10.1993 DE 4333748
(43) Veröffentlichungstag der Anmeldung: 05.04.1995
(73) Patentinhaber: MAN Nutzfahrzeuge Aktiengesellschaft, 80976 München (DE)
(72) Erfinder: Schubert, Klaus, Dr., D-82234 Wessling (DE); Kraus, Wolfgang, Prof., D-80997 München (DE)

(56) Entgegenhaltungen:
- EP-A- 0 247 295
- EP-A- 0 361 511
- EP-A- 0 374 488

## Beschreibung

Die Erfindung betrifft Fahrerhaus-Baureihen modularen Aufbaues mit Fahrerhäusern unterschiedlicher Längen- und Höhenabmessungen und unterschiedlichen Dachaufsätzen, wobei Fahrerhaus-Vorderwand und Fahrerhaus-Rückwand Gleichteile sind und die Seitenwände unterschiedliche Höhen aufweisen.

Es sind Fahrerhaus-Baureihen modularen Aufbaues bei Kraftwagen mit Fahrerhäusern unterschiedlicher Längen- Breiten- und Höhenabmessungen nach der DE 36 17 161 A1 bekannt. Kernbaustein dieser Fahrerhaus-Baureihen-Konzeption ist eine allen Baureihen einheitliche Fahrerhaustür und dazu angepaßte Fahrerhausteile. Solcherart wird im Rahmen einer Serienfertigung eine kostengünstige Herstellung und Montage unterschiedlicher Fahrerhäuser unter dem Gesichtspunkt einer raschen und flexiblen Typen-Variationsmöglichkeit erzielt.

Der Erfindung liegt die Aufgabe zugrunde, die gattungsgemäßen Fahrerhäuser im Fertigungs- und Montageaufwand noch weiter zu optimieren.

Dies wird erfindungsgemäß durch höhenvariable Fahrerhaustüren modularen Aufbaues erreicht, wobei in der detaillierten Ausführung die Fahrerhaus-Baureihen in ihrer niedrigsten Ausführung eine Basistür aufweisen und alle höheren Bauarten eine Basistür mit einem an dem oberen Rahmenteil der Basistür adaptierten Türaufsatz, der als Steckrahmenteil ausgebildet ist, wobei Basistür und Türaufsatz ein geschlossenes Erscheinungsbild darstellen. Solcherart kann gegenüber dem bekannten Stand der Technik auf einen Dachrahmen, der in der Montage mit höherem Fertigungs- und Einbauaufwand verbunden ist, verzichtet werden. Die Türaufsätze können unterschiedliche Höhen aufweisen und somit den Bedarf an verschiedenen Fahrerhaustüren bzw. Fahrerhauskabinenhöhen abdecken.

Die Erfindung ist in einem Ausführungsbeispiel dargestellt und beschrieben.

Es zeigen:
- Fig. 1: ein niedriges Fahrerhaus in der Perspektive,
- Fig. 2: eine Fahrerhaustür zum Fahrerhaus nach Fig. 1,
- Fig. 3: ein höheres Fahrerhaus in der Perspektive,
- Fig. 4: eine Fahrerhaustür zum Fahrerhaus nach Fig. 3,
- Fig. 5: eine Fahrerhaustür gemäß Fig. 4 im nicht zusammengesteckten Zustand.

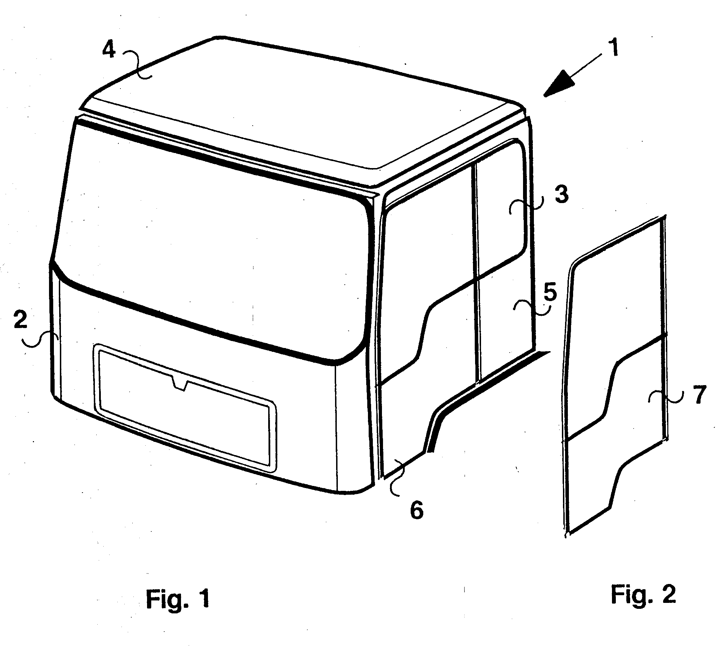

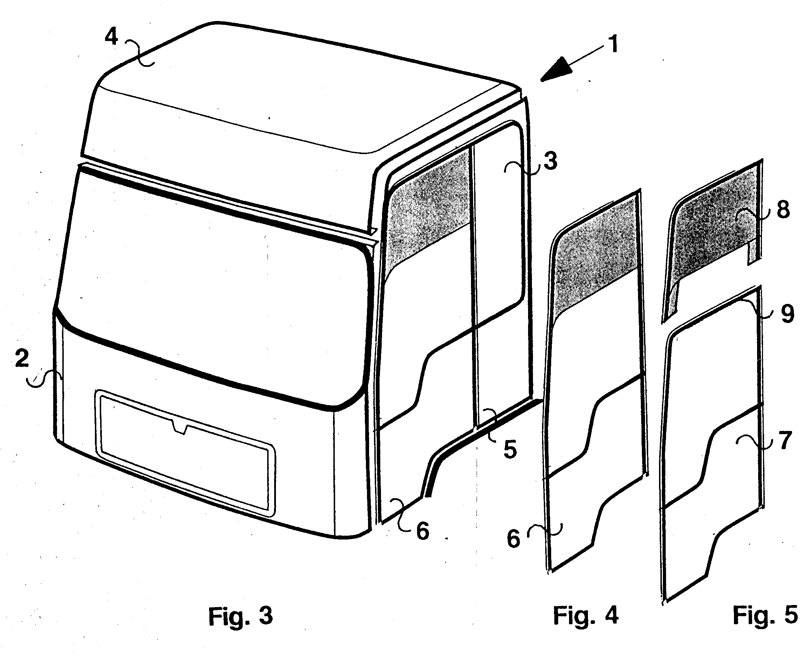

Die Fig. 1 zeigt ein Fahrerhaus 1 niedrigster Bauart mit für alle Baureihen gleichen Fahrerhaus-Vorderwand 2 und Fahrerhaus-Rückwand 3. Die Seitenteile 5 sind höhenvariabel, wie auch unterschiedliche Dachaufsätze die Höhe der Fahrerhäuser bestimmen. Den höhenvariablen Seitenteilen 5 sind höhenvariable Fahrerhaustüren 6 zugeordnet. In der niedrigsten Ausführung des Fahrerhauses 1 ist die höhenvariable Fahrerhaustür 6 gleich der Basistür 7 nach Fig. 2. Bei höheren Fahrerhäusern 1 gemäß Fig. 3 mit den Gleichteilen der Fahrerhaus-Vorderwand 2 und der Fahrerhaus-Rückwand 3 sowie dem Dachaufsatz 4 und den höhenvariablen Seitenwänden 5 besteht die höhenvariable Fahrerhaustür 6 gemäß Fig. 4 aus einer Basistür 7 und einem auf das obere Rahmenteil 9 der Basistür 7 aufgesteckten Türaufsatz 8 bzw. Steckrahmenteil gemäß Fig. 5. Basistür 7 und Türaufsatz 8 können in vorteilhafter Weise lasergeschweißt oder in einer anderen Verbindungsart miteinander verklebt sein.

### Bezugszeichenliste

- 1: Fahrerhaus
- 2: Fahrerhaus-Vorderwand
- 3: Fahrerhaus-Rückwand
- 4: Dachaufsätze
- 5: höhenvariable Seitenteile
- 6: höhenvariable Fahrerhaustür
- 7: Basistür
- 8: Türaufsatz bzw. Steckrahmenteil
- 9: oberes Rahmenteil von 7

## Patentansprüche

1. Fahrerhaus-Baureihen modularen Aufbaues mit Fahrerhäusern unterschiedlicher Längen- und Höhenabmessungen und unterschiedlichen Dachaufsätzen, wobei Fahrerhaus-Vorderwand und Fahrerhaus-Rückwand Gleichteile sind und die Seitenwände unterschiedliche Höhen aufweisen, gekennzeichnet durch höhenvariable Fahrerhaustüren (6) modularen Aufbaues.

2. Fahrerhaus-Baureihen nach Anspruch 1, dadurch gekennzeichnet, daß die Fahrerhaus-Baureihen in ihrer niedrigsten Ausführung eine Basistür (7) aufweisen und alle höheren Bauarten eine Basistür (7) mit an dem oberen Rahmenteil (9) der Basistür (7) adaptierten Türaufsatz (8), der als Steckrahmenteil ausgebildet ist, wobei Basistür (7) und Türaufsatz (8) ein geschlossenes Erscheinungsbild darstellen.

3. Fahrerhaus-Baureihen nach Anspruch 1 oder 2, dadurch gekennzeichnet, daß die Basistür (7) und der aufgesteckte Türaufsatz (8) durch Laserschweißen verbunden sind.

4. Fahrerhaus-Baureihen nach Anspruch 1 oder 2, dadurch gekennzeichnet, daß die Basistür (7) und der aufgesteckte Türaufsatz (8) durch Klebung verbunden sind.

## Claims

1. Cab model ranges of modular design with cabs of various lengths and heights and with different roof tops, the cab front and rear walls being identical parts and the side walls having different heights, characterised in that the cab doors (6) are of variable height and modular design.

2. Cab model ranges according to Claim 1, characterised in that the lower version of the cab model ranges has a base door (7) and that all higher versions have a base door (7) with a door top adapted to the upper frame part (9) of the base door (7), which door top (8) is designed as a slot-in frame, base door (7) and door top (8) forming a complete whole.

3. Cab model ranges according to Claim 1 or 2, characterised in that the base door (7) and the slotted-in door top (8) are connected with each other by means of laser welding.

4. Cab model ranges according to Claim 1 or 2, characterised in that the base door (7) and the slotted-in door top (8) are glued together.

## Revendications

1. Série de fabrication de cabines de conduite de construction modulaire comprenant des cabines de conduite de longueur et de hauteur différentes et dont les toits ont une surélévation différente, la paroi avant et la paroi arrière de la cabine correspondant toujours aux mêmes pièces et les parois latérales ayant des hauteurs différentes,
caractérisée par
des portières de cabines de conduite (6) de hauteur variable et de construction modulaire.

2. Série de fabrication de cabines de conduite selon la revendication 1,
caractérisée en ce que
les séries de fabrication de cabines de conduite pour la réalisation la plus basse comportent une portière de base (7) et toutes les constructions plus hautes ont une portière de base (7) avec une surélévation de portière (8) adaptée à la partie de cadre supérieure (9) de la portière de base (7), cette rehausse étant en forme de cadre emmanché, la portière de base (7) et la rehausse de portière (8) constituant un ensemble fermé d'aspect uniforme.

3. Série de fabrication de cabines de conduite selon la revendication 1 ou 2,
caractérisée en ce que
la portière de base (7) et la rehausse ou surélévation de portière (8), emmanchée, sont reliées par une soudure au laser.

4. Série de fabrication de cabines de conduite selon la revendication 1 ou 2,
caractérisée en ce que
la portière de base (7) et la rehausse ou surélévation de portière (8), emmanchée, sont reliées par collage.
